# EUROPEAN PATENT APPLICATION

(11) **EP 4 566 722 A1**
(43) Date of publication of application: **11.06.2025**
(21) Application number: 24217868.9
(22) Date of filing: 05.12.2024
(51) Int. Cl.: B05B 12/24

(54) **MULTI-COMPONENT MASKING SYSTEMS FOR HIGH TEMPERATURE APPLICATIONS**

(30) Priority: 05.12.2023 US 202318529944
(71) Applicant: Chromalloy Gas Turbine LLC, Palm Beach Gardens, Florida 33410 (US)
(72) Inventor: ORAS, Zachary, 33410 Palm Beach Gardens, FL (US); HOPKINS, Zachary, 33410 Palm Beach Gardens, FL (US); WHITE, Joseph, 33410 Palm Beach Gardens, FL (US); McCOMB, Joseph, 33410 Palm Beach Gardens, FL (US); SEGROVES, Roger, 33410 Palm Beach Gardens, FL (US)
(74) Representative: AWA Denmark A/S

(57) **Abstract**

A masking system for selectively masking a component includes a housing made of high-temperature material. The housing has a first shell and a second shell. The first shell has a first receiving area and a first window that extends through the first shell. The masking system has a liner that includes elastomeric material. The liner has a back side configured to fit within the first receiving area and a front side having a retaining feature configured to receive and retain the component. When the liner is disposed within the first receiving area and the component is received by the retaining feature, the first window corresponds to at least one portion of the component that is accessible.

## Description

### TECHNICAL FIELD

The disclosure relates generally to the field of masking systems. More specifically, the disclosure relates to masking systems for masking a component undergoing a high-temperature process, as indicated in the preamble of claim 1. Masking systems are known, e.g., from US 2014/0242278 and EP 2 434 102 B1.

### BACKGROUND OF THE DISCLOSURE

A gas turbine engine typically includes a multi-stage compressor coupled to a multi-stage turbine via an axial shaft. Air enters the gas turbine engine through the compressor where its temperature and pressure are increased as it passes through subsequent stages of the compressor. The compressed air is then directed to one or more combustors where it is mixed with a fuel source to create a combustible mixture. This mixture is ignited in the combustors to create a flow of hot combustion gases. These gases are directed into the turbine causing the turbine to rotate, thereby driving the compressor. The output of the gas turbine engine can be mechanical thrust via exhaust from the turbine or shaft power from the rotation of an axial shaft, where the axial shaft can drive a generator to produce electricity.

The compressor and turbine each include a plurality of rotating blades and stationary vanes having an airfoil extending into the flow of compressed air or flow of hot combustion gases. Each blade or vane has a particular set of design criteria which must be met to provide the necessary work to the flow passing through the compressor and the turbine. However, due to the severe nature of the operating environment, especially in the turbine, it is often necessary to cool these blades and vanes. The blades and vanes often utilize complex internal cooling passageways in order to maximize the efficiency of cooling fluid passing therethrough.

### BRIEF SUMMARY OF THE INVENTION

The present invention is defined in claim 1. The following presents a summary of the invention in order to provide a basic understanding of some aspects of the invention. This summary is not an extensive overview of the invention. It is not intended to identify critical elements of the invention or to delineate the scope of the invention. Its sole purpose is to present some concepts of the invention in a simplified form as a prelude to the more detailed description that is presented elsewhere herein.

In an aspect of the disclosure, a masking system for selectively masking a component includes a housing made of high-temperature material. The housing has a first shell and a second shell. The first shell has a first receiving area and a first window that extends through the first shell. The masking system has a liner that includes elastomeric material. The liner has a back side configured to fit within the first receiving area and a front side having a retaining feature configured to receive and retain the component. When the liner is disposed within the first receiving area and the component is received by the retaining feature, the first window corresponds to at least one portion of the component that is accessible.

In an aspect, according to any one of the preceding aspects, the second shell includes a second receiving area and a second window that extends through the second shell.

In an aspect, according to any one of the preceding aspects, the liner has a first part and a second part separate from the first part.

In an aspect, according to any one of the preceding aspects, the housing is additively manufactured.

In an aspect, according to any one of the preceding aspects, the liner is additively manufactured.

In an aspect, according to any one of the preceding aspects, the first shell is configured to be retained with the second shell.

In an aspect, according to any one of the preceding aspects, the first shell has a groove configured to fit within a channel of the second shell to retain the first shell to the second shell.

In an aspect, according to any one of the preceding aspects, the masking system is configured for the component to be a gas turbine component.

In an aspect, according to any one of the preceding aspects, the gas turbine component is at least one of a blade and a vane.

In an aspect, according to any one of the preceding aspects, the masking system is configured to enable the gas turbine component to undergo a high-temperature process.

In an aspect, according to any one of the preceding aspects, the high-temperature process includes HVOF coating.

In an aspect, according to any one of the preceding aspects, the first window is unobstructed by the liner.

In an aspect, according to any one of the preceding aspects, the retaining feature includes grooves configured to correspond to a dovetail of a blade.

In an aspect, according to any one of the preceding aspects, the first receiving area is generally V-shaped.

In an aspect of the disclosure, a method of masking a component includes additively manufacturing a closable housing having a first shell and a second shell using a rigid, high-temperature material. The first shell has a first receiving area and a first window. The method includes additively manufacturing a liner including elastomeric material. The liner has a back side configured to fit within the first receiving area and a front side having a retaining feature configured to receive the component. The method includes disposing the liner within the first receiving area and causing the retaining feature to receive the component. The method includes closing the housing such that the component is secured within the housing and the first window corresponds to at least a portion of the component that is accessible.

In an aspect, according to any one of the preceding aspects, the second shell has a second receiving area and a second window.

In an aspect, according to any one of the preceding aspects, the method includes HVOF coating the at least one portion of the component through the first window.

In an aspect, according to any one of the preceding aspects, the first shell has a frusto-cylindrical portion and a rectangular portion.

In an aspect of the disclosure, a masking system for selectively masking a component during a high-temperature process includes a closable housing made of high-temperature material and having a window. The masking system has an elastomeric liner disposed within the housing and configured to receive the component such that when the housing is closed, there is no relative movement between the housing and the component, and the window corresponds to at least a portion of the component that is to undergo a high-temperature process.

In an aspect, according to any one of the preceding aspects, each of the closable housing and the elastomeric liner are additively manufactured.

In an aspect, according to any one of the preceding aspects, the component is a gas turbine blade.

### BRIEF DESCRIPTION OF THE DRAWINGS

Illustrative embodiments of the present disclosure are described in detail below with reference to the attached drawing figures and wherein:
FIG. 1 is a perspective view of a turbine blade.
FIG. 2 is an enlarged view of a portion of root serrations of the turbine blade of FIG. 1.
FIG. 3 is a top view of a portion of a mask made with an elastomeric material.
FIG. 4 is a top view of a portion of a mask made with a high-temperature, low elongation material.
FIG. 5A is a perspective view of a masking system, according to some aspects of the disclosure.
FIG. 5B is an exploded view of the masking system of FIG. 5A.
FIGS. 6A and 6B are perspective views of a housing of the masking system of FIG. 5A.
FIG. 7A is a front view of a first shell of the housing of the masking system of FIG. 5A.
FIG. 7B is a rear view of the first shell of the housing of the masking system of FIG. 5A.
FIG. 7C is a perspective view of the first shell of the housing of the masking system of FIG. 5A.
FIG. 8A is a front view of a second shell of the housing of the masking system of FIG. 5A.
FIG. 8B is a rear view of the second shell of the housing of the masking system of FIG. 5A.
FIG. 8C is a perspective view of the second shell of the housing of the masking system of FIG. 5A.
FIG. 9A is front view of a first part of a liner of the masking system of FIG. 5A.
FIG. 9B is rear view of the first part of the liner of the masking system of FIG. 5A.
FIGS. 9C and 9D are each perspective views of the first shell of the housing with the first part of the liner disposed therein.
FIG. 10A is front view of a second part of the liner of the masking system of FIG. 5A.
FIG. 10B is rear view of the second part of the liner of the masking system of FIG. 5A.
FIGS. 10C and 10D are each perspective views of the second shell of the housing with the second part of the liner disposed therein.
FIG. 11 is a schematic showing a blade within the housing of the masking system of FIG. 5A during a high-temperature process.
FIG. 12 is a flowchart illustrating a method of making and using the masking system according to embodiments of the disclosure.

### DETAILED DESCRIPTION

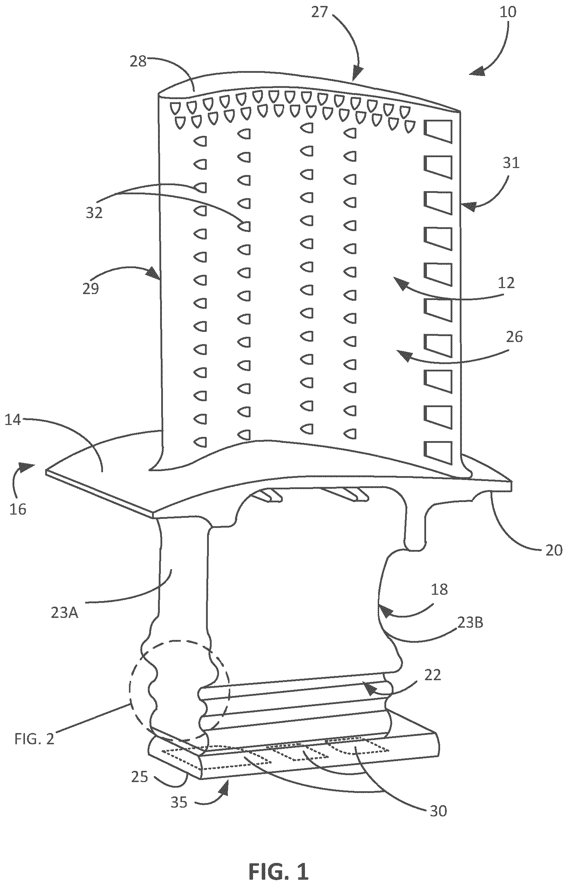

FIG. 1 shows a gas turbine component, such as a gas turbine blade 10. The turbine blade 10 generally includes an airfoil 12 extending from a top or gas path side surface 14 of a platform 16 and a root fixing portion or "dovetail" 18 depending from an undersurface 20 of the platform 16. The dovetail 18 may include one or more serrations or tangs 22 that extend laterally from one side 23A of the dovetail 18 to an opposing side 23B of the dovetail 18. The dovetail 18 may terminate at a terminal or bottom wall 25 that may span between the dovetail sides 23A and 23B. The dovetail 18, including the tangs 22 and the bottom wall 25 thereof, may be adapted for interlocking engagement in a corresponding slot defined in the periphery of a hub of a turbine rotor. The bottom wall 25 may be part of a metering plate 35 that is brazed or otherwise secured to the dovetail 18.

The airfoil 12 may have a pressure side 26, a suction side 27 opposite the pressure side 26, a tip 28, a leading edge 29, and a trailing edge 31. The tip 28 may include or may be configured to interact with a shroud. The shroud may be provided at the tip 28 of each blade 10, or may be a stationary ring including one or more circumferentially extending sections each connected to the gas turbine casing. The shroud(s) may be configured to seal the gap between the tip 28 of the blade 10 and stationary components (e.g., stators) of the turbine, and thereby, may reduce leakage flow between the rotating and stationary components. The airfoil 12, e.g., the pressure side 26 thereof, may come into contact with combustion gases that are at an extremely high temperature. The airfoil 12 or portions thereof may therefore be coated with heat-resistant, wear-resistant, and/or other coatings. During operation, the tip 28 may rub against the tip shroud, and the tip 28 may therefore additionally or alternately be coated with wear-resistant coatings. In like fashion, one or more other portions of the blade 10 may be coated with different materials depending on the environment in which these portions are located and the stresses encountered thereby.

The bottom wall 25 of the dovetail 18 may include one or more air inlet apertures 30. Further, one or more portions of the blade 10 may include cooling holes 32 for cooling the blade 10 during operation. The cooling holes 32 may be provided on one or more surfaces of the airfoil 12, such as the pressure side 26, the suction side 27, the tip 28, the leading edge 29, the trailing edge 31, or a combination thereof. The cooling holes 32 may be circular cooling holes, diffused (e.g., angled) cooling holes, cooling slots, or take on one or more other regular or irregular shapes. Cooling gas may pass through internal cooling channels (not illustrated for ease of description) in the blade 10 and emerge from the cooling holes 32 to create a blanket of thin film over the outer surface of the airfoil 12, thus preventing direct contact of the hot gases and the surfaces of the blade 10. For example, the illustrated blade 10 has air inlet apertures 30 in the bottom wall 25 of the dovetail 18 and cooling holes 32 on the pressure side 26 of the airfoil 12. The blade 10, including the airfoil 12 thereof, may include hollow interior passages for the passage of cooling air, for example, but not limited to, from air inlet apertures 30 to cooling holes 32. Thus, cooling air may be bled from the compressor and channeled into the air inlet apertures 30. This air may exit out the cooling holes 32 to cool one or more portions of the blade 10 during operation. One having skill in the art will understand that different blades may have differing cooling schemes and that the inlet apertures 30 and cooling holes 32 in FIG. 1 are merely exemplary and not intended to be independently limiting.

A gas turbine blade, such as the blade 10, may be manufactured using investment casting, also referred to in the art as lost-wax processing. The investment casting process may involve making a precise negative die of the blade shape that is filled with wax to form the blade shape. If the blade, such as the blade 10, is hollow and has interior cooling passages, a ceramic core in the shape of the cooling passages may be inserted into the middle. The wax blade may be coated with a heat-resistant material to make a shell, and then that shell may be filled with the blade alloy.

Once cast, the blade 10 may undergo one or more finishing processes to prepare the blade 10 for operation. The finishing processes may ensure that the blade 10 has the required aerodynamic profile, as such may impact engine efficiency and fuel consumption. The finishing processes may also make the blade 10 more resistant to fatigue, and thereby increase the lifespan of the blade 10. Some finishing processes may reduce the maintenance requirements associated with the blade 10.

In some cases, one or more portions of the blade 10 may be coated using a thermal spray technique, such as air plasma spraying (APS), vacuum plasma spraying (VPS), low pressure plasma spraying (LPPS), high velocity oxygen fuel spraying (HVOF), et cetera. For example, all or part of the serrations of a blade, vane, or other component may be coated using HVOF. To spray a component using HVOF, a mixture of fluid fuel and oxygen may be fed into a combustion chamber and ignited. The resultant gas may have an extremely high temperature and pressure, which may be ejected through a nozzle at supersonic speeds. Powder may be injected in the high velocity gas stream, and the gas stream may cause the powder to partially melt. The stream of hot gas and powder may be directed towards the surface to be coated. The resulting coating may be dense, have low porosity and high bond strength, and may provide corrosion resistance and other benefits.

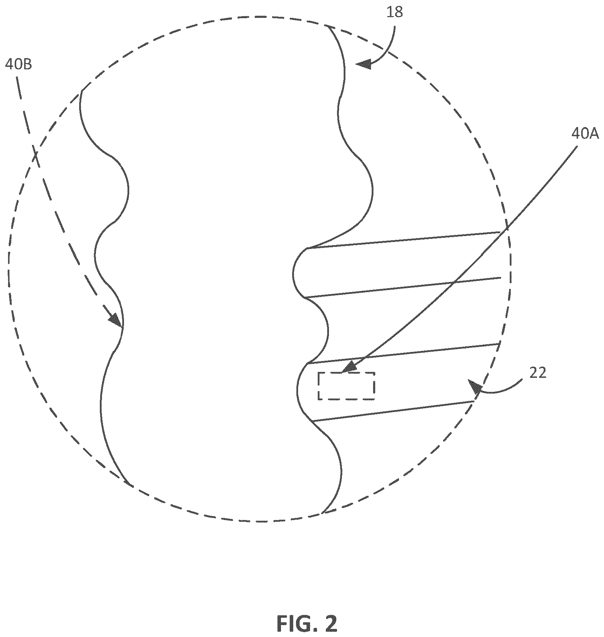

FIG. 2 shows an enlarged view of serrations 22 of dovetail 18 of blade 10 of FIG. 1. In the illustrated example, each of a portion 40A of serrations 22 on the pressure side of the dovetail 18 and a portion 40B of serrations 22 on the suction side of the dovetail 18 are to undergo a high-temperature process (portion 40B may oppose portion 40A and is not clearly visible in FIG. 2). For example, portions 40A and 40B may need be coated using a thermal spray technique, such as HVOF or another coating technique now known or hereinafter developed. The coating on portions 40A and 40B of serrations 22 may cause portions 40A and 40B to gently protrude relative to adjacent areas of serrations 22. The coating on portions 40A and 40B may therefore provide material for the turbine disc to cut into, and thereby may improve retention of the dovetail 18 within the turbine disc during operation of the gas turbine. The area of blade 10 being coated, i.e., the portions 40A and 40B in the illustrated example, may each be small, e.g., the area of each of portion 40A and 40B may, in some non-limiting examples, be less than about 0.08 m². For example, each of portions 40A and 40B may be about 250 mm wide and about 300 mm tall. In some examples, portion 40A and 40B may be identical, whereas in other examples, portion 40A may be bigger or smaller than portion 40B. In some examples, only one of the portion 40A and 40B may undergo a high-temperature process (for example, only one of portion 40A and 40B may be HVOF coated). The size(s) of the one or more portions of a component that require HVOF or other coating may vary from one component to the next.

HVOF is typically effectuated at extremely high temperatures. For example, the temperature of the gas during HVOF coating may reach about 2700°C, and the temperature of each of the portions 40A and 40B being coated may reach between about 230°C and about 370°C. Care may be taken to ensure that the thermal coating, e.g., the HVOF coating, does not impact areas of dovetail 18 or blade 10 other than portions 40A and 40B, as inclusion of the coating on other areas of the blade 10 may impact operation of the gas turbine. To ensure that the HVOF coating is confined to portions 40A and 40B of serrations 22, the remainder of the blade 10, or at a minimum, areas of blade 10 adjacent and/or proximate portions 40A and 40B and any other areas having a likelihood of being inadvertently coated during the HVOF coating process, may be shielded or "masked". In the prior art, to HVOF coat portions 40A and 40B, heat-resistant tape may be used to mask other areas of the blade 10 that are likely to come into contact with the coating. After these areas of the blade 10 have been covered with heat-resistant tape such that the portions 40A and 40B are exposed, the portions 40A and 40B may be coated.

While heat-resistant tape may serve to increase the likelihood that the HVOF coating is confined to portions 40A and 40B of serrations 22, this technique is not without challenges. The tape generally has to be manually applied by an operator and considering that the portions 40A and 40B to be coated may be small, it may take up to an hour or more to apply the tape to the blade 10 such that only the portions 40A and 40B remain exposed. Further, as tape that is adjacent portions 40A and 40B is removed after these portions have been coated, the tape may pull some of the coating along with the tape, and thereby necessitate recoating of the portions 40A and/or 40B. Moreover, the tape may be a consumable item (i.e., may not be used again), and particularly where the number of blades being coated is large, costs of tape may be large. It is not uncommon for manufacturers of turbine components to spend several hundreds of thousands of dollars a year on high-temperature masking tape alone.

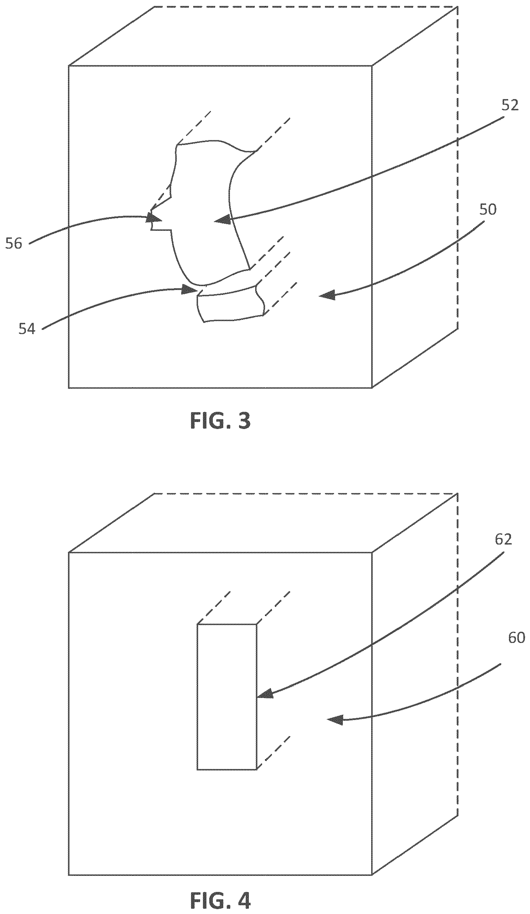

One potential alternative to using high-temperature masking tape to mask blade 10 while coating portions 40A and 40B of serrations 22 may be to use an elastomeric mask to selectively shield the blade 10 such that portions 40A and 40B remain exposed. FIG. 3 shows a portion of a mask 50 manufactured using a molding process. In the illustrated example, the mask 50 is made of an elastomeric material and has an opening 52. The opening 52 may be intended to correspond to the portion 40A of the blade 10, so that this portion may be coated through the opening 52 while the mask 50 covers one or more other areas of the blade 10. Manufacturing the mask 50 using an elastomeric material may ensure that the mask 50 is flexible and conforms to the surfaces of the blade 10 being protected by the mask 50. Advantageously, due to its elastomeric construction, the mask 50 may be stretched and pulled onto the blade 10 without damaging the blade 10.

In the illustrated example, the mask 50 is manufactured using RTV silicone, a room-temperature-vulcanizing silicone. Because the portion 40A is small (e.g., has an area between about 0.08 m² and about 0.04 m²), the opening 52 intended to correspond to the portion 40A is also small. However, as can be seen in FIG. 3, the opening 52 is not symmetrical and has flash 54 and irregularities 56. Flash 54 may be generated during molding when the injection material (i.e., silicone in this example) spills outside the mold and unintentionally fills a part of the opening 52. The flash 54 and irregularities 56 are unintended consequences of manufacturing, using legacy molding techniques, an elastomeric mask having a small feature (i.e., opening 52 in this example that corresponds to the portion 40A). Such irregularities and flash are commonly associated with molding, using elastomeric material, a component having fine features (such as the mask 50 with its small opening 52). The elastomeric mask 50, due to the distortions in the shape of the opening 52, may be ineffective at covering the blade 10 such that only the portion 40A (or 40B) is exposed.

Another problem with the elastomeric mask 50 may be the inability of the elastomer (e.g., silicone) to withstand high temperatures for an extended duration. As noted, the surface temperature of the part being coated using an HVOF process may be in excess of 200°C, e.g., the temperature of the part may reach between about 230°C and about 370°C. RTV silicone, however, may not be able to withstand temperatures above 230°C. Therefore, even if the elastomeric mask 50 may be manufactured using legacy methods (such as molding) to include a small symmetrical opening 52 that suitably corresponds to the portion 40A and/or 40B, the elastomeric mask 50 may nevertheless be unusable to protect those areas of the blade 10 that are not undergoing a high-temperature process. The high temperatures encountered during HVOF coating may cause mask 50 to deform and/or disintegrate, and the coating may inadvertently contact those areas of blade 10 that are not intended to be coated.

FIG. 4 shows a portion of a mask 60 that includes, instead of silicone or other elastomeric material as in the mask 50 of FIG. 3, a high-temperature, low elongation material. The mask 60 is intended to cover the blade 10 such that the portion 40A thereof is exposed for HVOF coating. The mask 60 may be manufactured using conventional techniques (e.g., molding) or may be additively manufactured.

The mask 60 has an opening 62 configured to correspond to portion 40A (FIG. 2), and another opening (not clearly visible in FIG. 4) configured to correspond to portion 40B. The opening 62 is generally symmetrical and, unlike opening 52 of mask 50, suitably corresponds to portion 40A of blade 10 to allow portion 40A to be coated. Thus, manufacturing the mask 60 using a high-temperature, low-elongation material, unlike manufacturing the mask 50 using an elastomer, may allow for the incorporation of a small opening 62 in the mask 60 that precisely corresponds to the portion 40A and/or 40B. Further, unlike the elastomeric mask 50, the high-temperature, low elongation material of mask 60 may withstand the exorbitant temperatures encountered during high-temperature applications such as HVOF coating.

However, the mask 60 may not be ideally suited for use in coating the portion 40A (or 40B) via HVOF coating because of the rigidity of the low-elongation material in mask 60. The blade 10, particularly in applications involving repair of blades, may not be identical to other blades 10 in the same set. For example, one blade 10 may have a different wear pattern compared to another blade 10 in the same set (e.g., the airfoil of one blade 10 may be worn at the tip whereas the airfoil of another blade 10 in the same set may additionally or alternately be worn at the leading edge). In view of even minor differences between the blades 10 of the same set, the mask 60, because of its rigid construction, may not allow for the same portion 40A of each blade 10 to be accessed for the high-temperature process. For example, a mask 60 that fits one blade 10 to expose the portion 40A may not suitably correspond to other blades 10 in the same set (e.g., the opening 62 of the mask 60 may not correspond to the same location on each of the different blades 10). Such may be undesirable. It may be beneficial to have a mask that is resistant to high-temperatures but can also be used to coat the same portions 40A and 40B of blades 10 in a set notwithstanding minor differences between the blades 10.

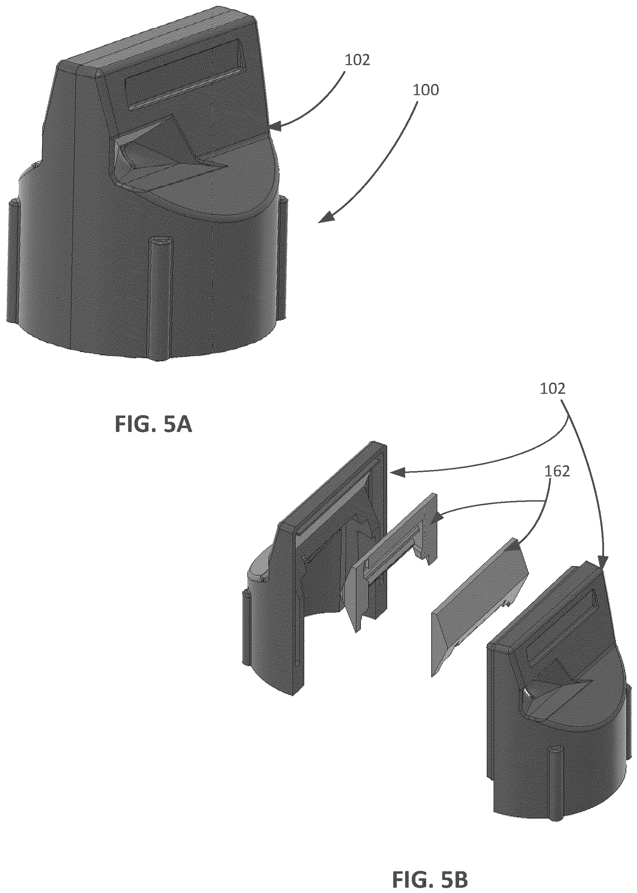

FIG. 5A shows a multi-component masking system 100 for a high-temperature process, according to some aspects of the disclosure. The multi-component masking system 100 may also be referred to herein as a masking system, a mask, a high-temperature mask, a cover, or a jacket (hereinafter "masking system 100"). FIG. 5B shows an exploded view of the masking system 100.

In some aspects, the masking system 100 may have a housing 102 and a liner 162 (FIG. 5B) that fits within the housing 102. The component to be coated, e.g., the blade 10 or another component, may be situated inside the masking system 100. The liner 162 may be made of a compliant material (e.g., an elastomer) and may ensure that each blade in the same set, notwithstanding minor differences between the blades as discussed above, is appropriately secured within the masking system 100 and does not move relative to the masking system 100 during high-temperature processing. The housing 102 may have windows (described hereinafter) via which portions of the component, e.g., the portion 40A and 40B of blades 10, may be coated without impacting the remainder of the component.

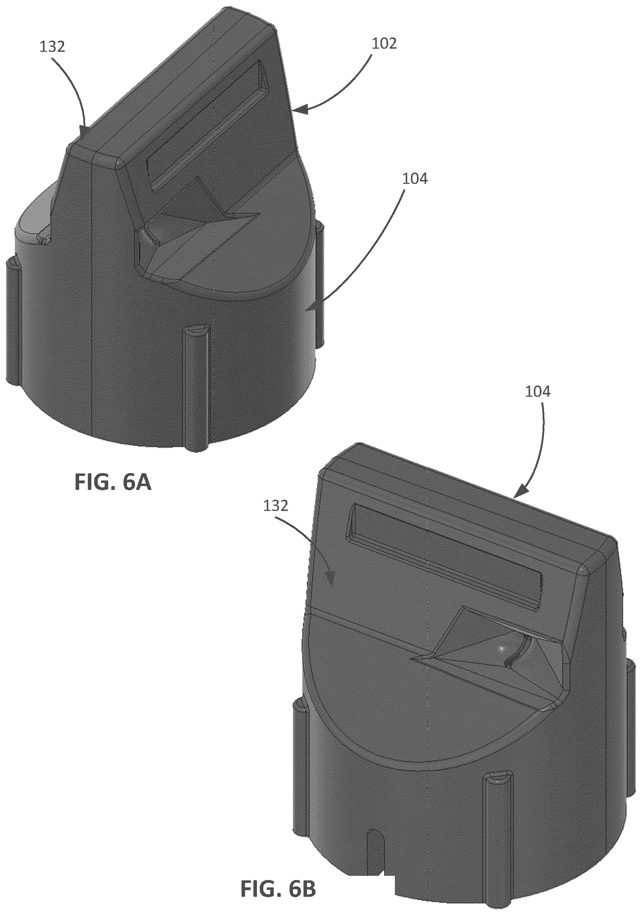

FIGS. 6A and 6B show the housing 102 in more detail. The housing 102 may, in some non-limiting examples, includes a first shell or portion 104 and a second shell or portion 132 that opposes the first shell 104. The first shell 104 and the second shell 132 may be configured to be removably secured to each other such that the blade 10 that is to undergo a high-temperature process is retained therein.

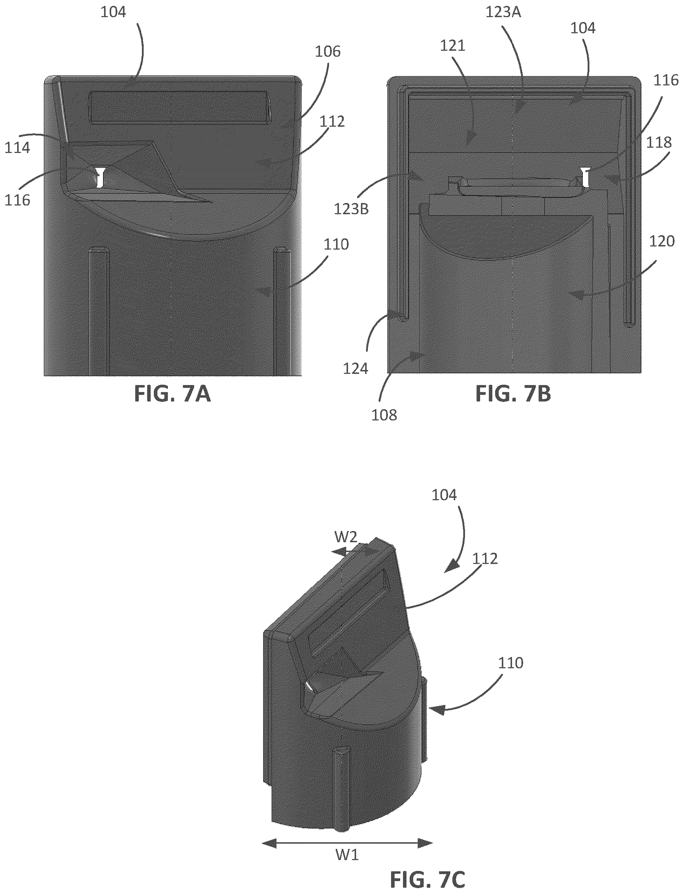

FIGS. 7A, 7B, and 7C respectively show a front view, a rear view, and a perspective view of the first shell 104 of the housing 102. In some non-limiting examples, the first shell 104 may be of unitary construction.

The first shell 104 may have an outer portion 106 (FIG. 7A) and an inner portion 108 (FIG. 7B) that opposes the outer portion 106. In some aspects of the disclosure, the outer portion 106 of the first shell 104 may include a first outer portion 110 and a second outer portion 112 that extends from the first outer portion 110. In some examples, the first outer portion 110 may be generally frusto-cylindrical and convex, and the second outer portion 112 may be generally rectangular. In other examples, either of the first outer portion 110 and the second outer portion 112 may be spherical, polygonal, pyramidal, or take on other regular or irregular shapes. A width W1 of the first outer portion 110 may, in aspects, be greater than a width W2 of the second outer portion 112. The second outer portion 112 may be tapered such that the width W2 thereof may decrease as the second outer portion 112 extends away from the first outer portion 110.

The outer portion 106, in some examples, may have a first recessed segment 114. In some examples, a part of the first recessed segment 114 may be disposed on the first outer portion 110 and a part of the first recessed segment 114 may be disposed on the second outer portion 112. The first recessed segment 114 may have a first opening or window 116. The first window 116 may correspond to a part of the blade 10 to be coated, such as the portion 40A (or the portion 40B).

The inner portion 108, like the outer portion 106, may include a first inner portion 120 and a second inner portion 118. The first inner portion 120 may oppose the first outer portion 110 and the second inner portion 118 may oppose the second outer portion 112. The first inner portion 120 may be generally frusto-cylindrical and concave. In other examples, the first inner portion 120 may be rectangular, spherical, polygonal, or take on other regular or irregular shapes.

The second inner portion 118 may include a first receiving area or pocket 121. The first receiving area 121 may be configured to accept the inner liner 162. In some examples, the first receiving area 121 may be generally V-shaped. The first receiving area 121, in some examples, may have a first angled surface 123A and a second angled surface 123B that collectively form the generally V-shaped first receiving area 121. The first window 116 may extend through the second angled surface 123B. In other examples, instead of being V-shaped, the first receiving area 121 may take on other symmetrical or asymmetrical shapes suitable to receive the inner liner 162.

In some examples, the inner portion 108 of the first shell 104 may include one or more features configured to allow the first shell 104 to mate with (e.g., lockingly engage or be retained with) the second shell 132. For example, the inner portion 108 may include one or more projections 124. As discussed herein, the projections 124 may be configured to mate with a corresponding feature of the second shell 132. In some examples, the projections 124 may be generally U-shaped. In other examples, the projections 124 may be rectangular, circular, or take on other symmetrical or asymmetrical shapes.

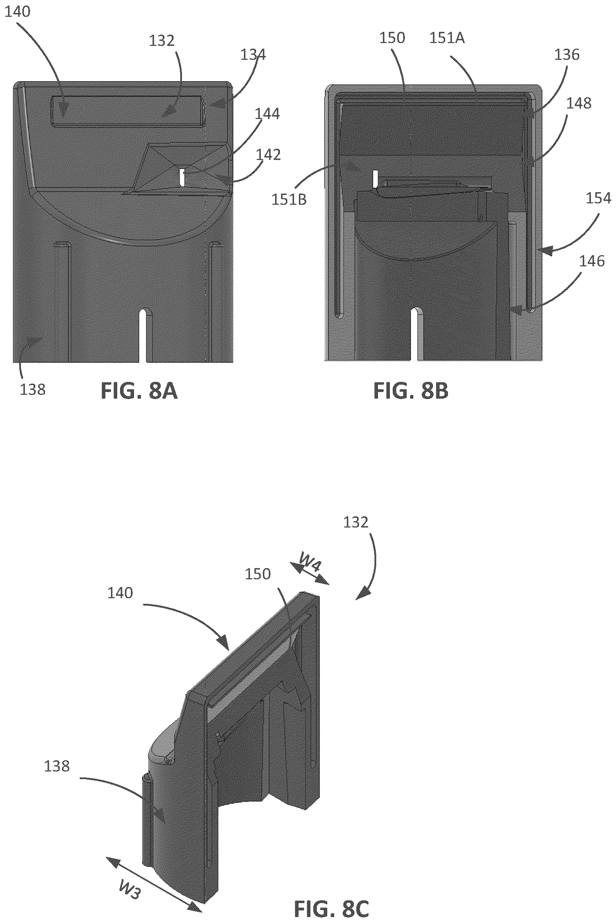

FIGS. 8A, 8B, and 8C respectively show a front view, a rear view, and a perspective view of the second shell 132 of the housing 102. In some non-limiting examples, the second shell 132 may be of unitary construction.

The second shell 132, like the first shell 104, may have an outer portion 134 (FIG. 8A) and an inner portion 136 (FIG. 8B) that opposes the outer portion 134. In some aspects of the disclosure, the outer portion 134 of the second shell 132 may include a first outer portion 138 and a second outer portion 140 that extends from the first outer portion 138. In some examples, the first outer portion 138 may be generally frusto-cylindrical and convex, and the second outer portion 140 may be generally rectangular. In other examples, either of the first outer portion 138 and the second outer portion 140 may be spherical, polygonal, or take on other regular or irregular shapes. A width W3 of the first outer portion 138 may, in aspects, be greater than a width W4 of the second outer portion 140. The second outer portion 140 may be tapered such that the width W4 thereof decreases as the second outer portion 140 extends away from the first outer portion 138. The width W3 and W4 of the second shell 132 may or may not be respectively equal to widths W1 and W2 of the first shell 104.

The outer portion 134, in some examples, may have a second recessed segment 142. The second recessed segment 142 of the second shell 132 may, in some examples, generally correspond to the first recessed segment 114 of first shell 104. In some examples, a part of the second recessed segment 142 may be disposed on the first outer portion 138 and a part of the second recessed segment 142 may be disposed on the second outer portion 140. The second recessed segment 142 may have a second opening or window 144. The second window 144, like the first window 116 of the first shell 104, may correspond to the part of the blade 10 to be coated, such as the portion 40B (or the portion 40A).

The inner portion 136 may include a first inner portion 146 and a second inner portion 148. The first inner portion 146 may be generally frusto-cylindrical and concave. In other examples, first inner portion 146 may be rectangular, spherical, polygonal, or take on other regular or irregular shapes. The first inner portion 146 may oppose the first outer portion 138 and the second inner portion 148 may oppose the second outer portion 140.

The second inner portion 148 may include a second receiving area or pocket 150. The second receiving area 150 may also be configured to accept the inner liner 162. In some examples, the second receiving area 150 may be generally V-shaped. The second receiving area 150, in some examples, may have a first angled surface 151A and a second angled surface 151B that collectively form the generally V-shaped second receiving area 150. The second window 144 may extend through the second angled surface 151B. In other examples, instead of being V-shaped, the second receiving area 150 may take on other symmetrical or asymmetrical shapes suitable to receive the inner liner 162.

In some examples, the inner portion 136 of the second shell 132 may include one or more features configured to allow the second shell 132 to mate with (e.g., lockingly engage or be retained with) the first shell 104. For example, the inner portion 136 may include one or more channels 154. The channels 154 of the second shell 132 may be configured to matingly receive the projections 124 of the first shell 104. In some examples, the channels 154 may be generally U-shaped. In other examples, the channels 154 may be rectangular, circular, or take on other symmetrical or asymmetrical shapes.

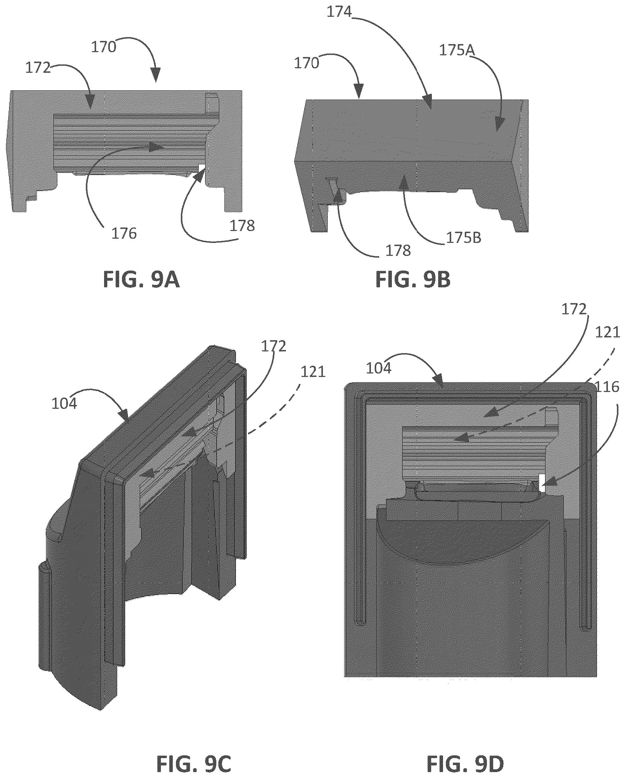

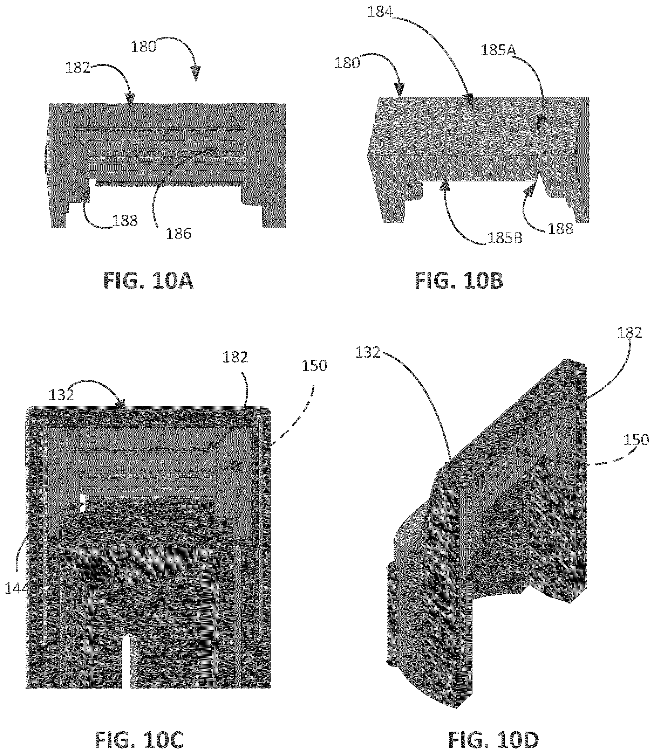

FIG. 5B shows the liner 162. The liner 162 may, in aspects, include a first part 170 (FIGS. 9A and 9B) and a second part 180 (FIGS. 10A and 10B). In some examples, as in the example illustrated in FIG. 5B, the first part 170 and the second part 180 of the liner 162 may be separate. In other examples, the liner 162 may be of unitary construction, e.g., the first part 170 and the second part 180 of the liner 162 may be formed together as part of a one-piece housing.

FIGS. 9A and 9B respectively show a front side 172 and a back side 174 of the first part 170 of the liner 162. The back side 174 may, in some examples, be generally V-shaped. Specifically, the back side 174 may include a first angled surface 175A and a second angled surface 175B that collectively form the V-shape of the back side 174. In other examples, the back side 174 may take on other symmetrical or asymmetrical shapes.

The back side 174 of the first part 170 of liner 162 may generally correspond to first receiving area 121 of first shell 104. Specifically, first angled surface 175A of first part 170 of liner 162 may generally correspond to first angled surface 123A of first receiving area 121 of first shell 104. Similarly, second angled surface 175B of first part 170 of liner 162 may generally correspond to second angled surface 123B of first receiving area 121 of first shell 104. The first part 170 of liner 162 may be disposed within first receiving area 121 of first shell 104 such that: (a) first angled surface 123A of first receiving area 121 of first shell 104 is adjacent and in contact with first angled surface 175A of first part 170 of liner 162; and (b) second angled surface 123B of first receiving area 121 of first shell 104 is adjacent and in contact with second angled surface 175B of first part 170 of liner 162. FIGS. 9C and 9D each show first part 170 of liner 162 disposed within first receiving area 121 of first shell 104 such that front side 172 of first part 170 of liner 162 is accessible to receive the blade 10 that is to undergo a high-temperature process.

The front side 172 of first part 170 of liner 162 may include retaining features configured to securely retain at least a portion of the blade 10. For example, the front side 172 of first part 170 of liner 162 may have grooves or other retaining features 176. The grooves 176 may be configured to generally correspond to and retain the blade 10. For example, the grooves 176 may be configured to generally correspond to and retain the dovetail serrations 22 of the blade 10 that will be housed within the housing 102 for coating.

The pressure side of the blade 10 (e.g., the dovetail 18 thereof) that is to be housed within the housing 102 may not be identical to the suction side of the blade 10. The grooves 176, in some non-limiting examples, may be configured to retain the blade 10 to be coated only in one orientation. For example, front side 172, including the grooves 176 thereof, may correspond to only one of the dovetail suction side and the dovetail pressure side of the blade 10. Such configuration may ensure that blades that are to undergo a high-temperature process are situated in the housing 102 only in one orientation.

FIGS. 10A and 10B respectively show the front side 182 and the back side 184 of the second part 180 of liner 162. The back side 184 may, in some examples, be generally V-shaped. Specifically, the back side 184 may include a first angled surface 185A and a second angled surface 185B that collectively form the V-shaped back side 184. In other examples, the back side 184 may take on other symmetrical or asymmetrical shapes.

The back side 184 of second part 180 of liner 162 may generally correspond to second receiving area 150 of second shell 132. Specifically, first angled surface 185A of second part 180 of liner 162 may generally correspond to first angled surface 151A of second receiving area 150 of second shell 132. Similarly, second angled surface 185B of second part 180 of liner 162 may generally correspond to second angled surface 151B of second receiving area 150 of second shell 132. The second part 180 of liner 162 may be disposed within second receiving area 150 of second shell 132 such that: (a) first angled surface 151A of second receiving area 150 of second shell 132 is adjacent and in contact with first angled surface 185A of second part 180 of liner 162; and (b) second angled surface 151B of second receiving area 150 of second shell 132 is adjacent and in contact with second angled surface 185B of second part 180 of liner 162. FIGS. 10C and 10D each show the second part 180 of the liner 162 disposed within the second receiving area 150 such that front side 182 of liner second part 180 is accessible to receive the blade 10 that is to undergo a high-temperature process (e.g., blade 10).

The front side 182 of liner second part 180 may include grooves or other retaining features 186. The grooves 186 may be configured to generally correspond to and retain the blade 10 to be coated. For example, the grooves 186 may be configured to generally correspond to and retain dovetail serrations 22 of blade 10 that will be housed within the housing 102 for coating.

In some examples, grooves 176 of first part 170 of liner 162 may be configured to retain one side of the blade 10 and grooves 186 of second part 180 of liner 162 may be configured to retain the other side of the blade 10. For example, where front side 172 of first part 170 of liner 162 is configured to retain the pressure side of dovetail 18 of blade 10, the front side 182 of the second part 180 of liner 162 may be configured to retain the suction side of dovetail 18 of blade 10, or vice versa. The respective configuration of the front sides 172 and 182 of the first part 170 and the second part 180 of the liner 162 may ensure that the blade 10 to be coated fits within the housing 102 only in one orientation.

Each of the liner first part 170 and the liner second part 180, specifically front sides 172 and 182 thereof, may be configured to retain the blade 10. When the liner first part 170 is situated within the first shell 104, the liner first part 170 may not obstruct the first window 116. That is, the shape and geometry of liner first part 170 may be configured such that liner first part 170 does not fully or partially obstruct first window 116 when liner first part 170 is disposed within first shell 104. Similarly, the shape and geometry of the liner second part 180 may be configured such that liner second part 180 does not fully or partially obstruct second window 144 when liner second part 180 is disposed within second shell 132. The liner 162, i.e., each of first part 170 and second part 180 thereof, may facilitate retention of the blade 10 within the housing 102 for a high-temperature process without being impacted by the high-temperature process (e.g., the HVOF coating).

In an example, the first part 170 of liner 162 may include a notch or opening 178 (FIGS. 9A and 9B) that is adjacent the first window 116 when the liner first part 170 is received within the first receiving area 121 of first shell 104. The notch 178 may be at least as large as the first window 116, and in embodiments, may be larger than the first window 116. The notch 178 in the first part 170 of liner 162 need not have a tight tolerance and need not stringently correspond to the first window 116. Rather, all that is required is for the notch 178 to be large enough such that the liner first part 170 does not obstruct the first window 116. As discussed above, creating a fine feature in an elastomeric material may lead to flash and irregularities. Because the housing 102 (and not the liner first part 170) is being used to selectively shield the blade 10 from heat, and the liner first part 170 is instead being used to allow the blade 10 to securely fit within the housing 102, the notch 178 need not exactly correspond to the portion of the blade 10 that is to undergo a high-temperature process. In the same manner, liner second part 180 may have a notch 188 (FIG. 10B) that is adjacent second window 144 but which need not stringently correspond to second window 144 so long as the liner second part 180 does not obstruct second window 144.

In some non-limiting examples, one or more portions of the masking system 100, or the entire masking system 100, may be additively manufactured. Additive manufacturing, also referred to as 3D printing, may be performed by dividing the shape of a three-dimensional object, i.e., the mask 100 in this example, into a number of two-dimensional cross sections having a uniform or variable thickness, and forming the two-dimensional cross sections to be stacked one by one. There are several known additive printing methods such as a material extrusion method, a material jetting method, a binder jetting method, a sheet lamination method, a vat photo-polymerization method, a powder bed fusion method, a directed energy deposition (DED) method, et cetera. Any one or more of these methods, or any other additive manufacturing method, now known or hereinafter developed, may be employed to manufacture the mask 100, including the housing 102 and the liner 162 thereof.

In some examples, each of the housing 102 (i.e., each of the first shell 104 and the second shell 132 thereof) and the liner 162 (i.e., each of the first part 170 and the second part 180 thereof) may be manufactured using vat photo-polymerization. Vat photopolymerization, such as stereolithography, direct light processing, continuous liquid interface production, solid ground curing, et cetera, is a category of additive manufacturing processes that create three dimensional objects by selectively curing material (e.g., resin or other photopolymers) through targeted light-activated polymerization. When exposed to certain wavelengths of light, the liquid photopolymers' molecules may rapidly bind together and cure into a solid state through a process called photopolymerization. The liquid photopolymer(s) may be held in a container or vat with the build platform partially submerged near the surface of the liquid. Using the information supplied by a CAD or other design file, the printer may direct a light source to selectively cure the liquid photopolymer into a solid layer. Then the build platform may then be re-submerged into the remaining resin and the process may be repeated for the next layers until the housing 102 has been fully printed. The liner 162 may likewise be printed using vat photopolymerization or another suitable additive manufacturing technique.

In some aspects of the disclosure, the housing 102 may be additively manufactured using a high-temperature, low elongation material, and the liner 162 may be additively manufactured using an elastomeric material. The phrase "high-temperature material" is defined herein to mean a material that has a heat distortion temperature of at least about 300°C. The phrase "high-temperature process" is defined herein to mean a process having associated therewith a temperature of at least about 300°C, such as a thermal coating (e.g., HVOF coating) or other high-temperature process.

In some examples of the disclosure, the housing 102 may be additively manufactured using 3D 3955 from Loctite^{®}, which is a halogen free high-temperature and high-modulus material having a shore hardness of between about 85 D. In other examples, the housing 102 may be additively manufactured using e.g., resins, pellets, filaments, powders, and/or other suitable materials having a shore hardness of between about 60 D and about 100 D, and in some examples, between about 70 D and about 90 D. The material used to manufacture the housing 102 may be high-temperature material and may stand up to the exorbitant temperatures encountered during HVOF coating and other high-temperature processes. For example, the material used to manufacture the housing 102, and thus the housing 102, may be able to withstand temperatures above about 500°C, above about 400°C, and/or above about 300°C. The housing 102 may be generally rigid.

In some examples of the disclosure, the liner 162 may be additively manufactured using an elastomeric material. Additively manufacturing the liner 162 using elastomeric material may provide one or more benefits over manufacturing the liner 162 using conventional techniques (e.g., molding, which requires the fabrication of a tool prior to manufacturing the part, and therefore, may be more laborious and expensive compared to additive manufacturing). Further, additively manufacturing the liner 162 using elastomeric material may ensure that the liner 162 is flexible and conforms to the surfaces of the blade 10 being coated.

In an example of the disclosure, the liner 162 may be additively manufactured using silicone elastomers having a shore hardness in a range between about 50 and about 90A. In some examples, IND402 from Loctite^{®} may be used to additively manufacture liner 162. In other examples, elastomeric three-dimensional printable polymers (e.g., resins, pellets, filaments, powders, and similar materials) that provide a minimum shore hardness of about 75A and a minimum tear strength of about 28 kN/m may be used to additively manufacture liner 162.

As noted, particularly in applications involving repair of blades, one blade in the set may not be identical to another blade in the same set, e.g., due to the different wear patterns of these blades. Due to its elastomeric material construction, the front side 172 of the first part 170 of the liner 162, including the grooves 176 thereof, may be stretched and made to conform to one of the suction side and the pressure side of the dovetail of different blades in the same set, notwithstanding the differences between the blades. Similarly, the elastomeric construction of the front side 182 of the second part 180 of the liner 162 may allow the second part 180 of the liner 162 to be stretched such that it conforms to the other of the suction side and the pressure side of the blades, notwithstanding minor variations between the blades. If the rigid housing 102 alone included features configured to tightly correspond and conform to the dovetail of a particular blade in a set such that the blade does not move relative to the housing 102 once secured within the housing 102, the housing 102, because of its rigidity, may not have been usable to suitably retain other blades in the same set. The liner 162, therefore, due to its flexibility, may allow for blades having minor variations to fit within the same housing 102 such that once the blade is retained in the housing 102, there is little or no relative movement between the blade and the housing 102.

Once first part 170 of the liner 162 is disposed within first receiving area 121 of first shell 104 of housing 102, and second part 180 of liner 162 is disposed within second receiving area 150 of second shell 132 of the housing 102, blade 10 may be situated within the housing 102 such that one of the suction side and the pressure side of dovetail 18 conforms to the front side of one of first part 170 and second part 180 of liner 162 and the other of the suction side and the pressure side of dovetail 18 conforms to front side of the other of first part 170 and second part 180 of liner 162. The housing 102 may then be closed. For example, the first shell 104 may be secured to the second shell 132 such that the projections 124 of the first shell 104 are received within the channels 154 of the second shell 132. In some examples, instead of or in addition to the projections 124 and the channels 154, the first shell 104 and the second shell 132 may have a ball and socket or other suitable locking feature to allow the first shell 104 to be secured to the second shell 132. In some examples, once the first shell 104 and the second shell 132 are mated to each other or are otherwise brought into contact, a zip tie, fastener, or other suitable lock may be used to secure the first shell 104 to the second shell 132 such that the blade 10 is retained within the housing 102 and does not move relative to the housing 102. A portion of the blade 10 may now undergo a high-temperature process while another portion of the blade 10 is protected by the housing 102. For example, the portions 40A and 40B of the blade 10 may be HVOF coated through the windows 116 and 144 while other portions of the dovetail 18 are protected by the housing 102.

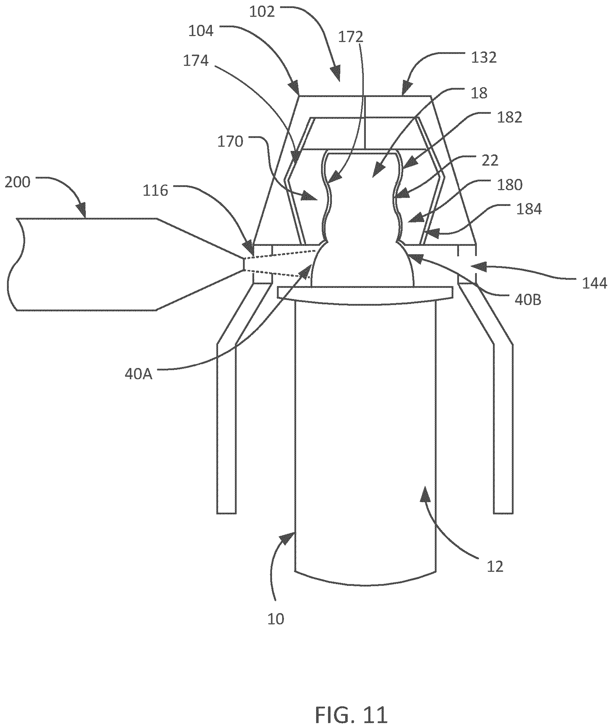

FIG. 11 shows the portion 40A of serrations 22 of blade 10 being HVOF coated using the masking system 100. Specifically, first part 170 of liner 162 may be disposed within first receiving area 121 of first shell 104 and second part 180 of liner 162 may be disposed within second receiving area 150 of second shell 132. The blade 10 may then be situated within the housing 102 such that one of the pressure side and the suction side of the dovetail 18 fits within the front side 172 of liner first part 170 and the other of the pressure side and the suction side of the dovetail 18 fits within the front side 182 of liner second part 180. The first shell 104 and the second shell 132 may now be locked or otherwise brought into contact with each other with the dovetail 18 secured within housing 102 such that there is no relative movement between the blade 10 and housing 102 of the masking system 100. Each of portions 40A and 40B of blade 10 to be coated may now be accessible and coated via one of the first window 116 and the second window 144. A nozzle 200 of an HVOF apparatus may be used to coat portions 40A and 40B through the first window 116 and second window 144 and the housing 102 of masking system 100 may preclude other portions of the blade 10 from coming into contact with the coating. Once the coating process is completed, the housing 102 may be opened by disassociating the first shell 104 from the second shell 132, and the blade 10 may be removed. The same masking system 100 may then be used to coat other blades 10 in the same set.

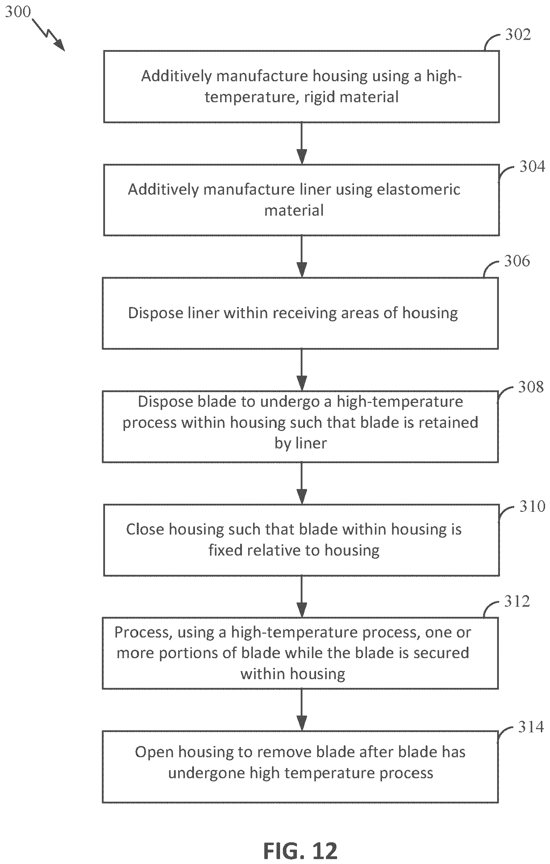

FIG. 12 shows a flowchart illustrating a method 300 of making and using masking system 100 to selectively shield the blade 10 during a high-temperature process. At step 302, the housing 102 (e.g., each of the first shell 104 and second shell 132) may be additively manufactured using a high-temperature, rigid material. At step 304, the liner 162 (e.g., each of first part 170 and second part 180 of liner 162) may be additively manufactured using an elastomeric material. At step 306, liner 162 may be disposed within receiving areas of first shell 104 and second shell 132. For example, first part 170 of liner 162 may be disposed within first receiving area 121 of first shell 104 and second part 180 of liner 162 may be disposed within second receiving area 150 of second shell 132. At step 308, the blade 10 to undergo a high temperature process may be disposed within housing 102 such that the blade 10 is retained by liner 162. For example, one of suction side and pressure side of dovetail 18 may be retained by grooves 176 of first part 170 of liner 162 and the other of suction side and pressure side of dovetail 18 may be retained by grooves 186 of second part 180 of liner 162. At step 310, the housing 102 may be closed such the blade 10 within housing 102 is fixed relative to housing 102. For example, projections 124 of first shell 104 may be mated with channels 154 of second shell, and/or the first shell 104 may be secured to second shell 132 using a ball and socket lock, a zip tie, or other means. At step 312, portions 40A and 40B may undergo a high-temperature process (e.g., may be HVOF coated) via first window 116 and second window 144. At step 314, once the high-temperature process is complete, the housing 102 may be opened to remove the blade 10. The housing 102 may be used in the high-temperature processing of other blades 10.

While the liner 162 shown in the figures includes two parts, in some examples, the liner 162 may unitary liner. Further, while the disclosure explains masking system 100 using a gas turbine blade 10 that is to undergo a high-temperature process, masking system 100 may be used to selectively shield other components (e.g., other gas turbine components in the gas path or elsewhere, or components of other machines and assemblies). Further, while the masking system 100 is shown being used with an HVOF coating process, the masking system 100 may likewise be used to selectively shield a component undergoing any high-temperature process, such as welding, brazing, coating, or any other high-temperature processes now known or subsequently developed.

As discussed above, the size(s) of the one or more portions of a component that require HVOF or other coating may vary from one component to the next. The mask 100, including the windows thereof via which such coating is effectuated, may therefore be configured to meet the operational requirements of the particular component.

Many different arrangements of the various components depicted, as well as components not shown, are possible without departing from the spirit and scope of the present disclosure. Embodiments of the present disclosure have been described with the intent to be illustrative rather than restrictive. Alternative embodiments will become apparent to those skilled in the art that do not depart from its scope. A skilled artisan may develop alternative means of implementing the aforementioned improvements without departing from the scope of the present disclosure.

It will be understood that certain features and subcombinations are of utility and may be employed without reference to other features and subcombinations and are contemplated within the scope of the claims. Not all steps listed in the various figures need be carried out in the specific order described.

## Claims

1. A masking system (100) for selectively masking a component, the masking system (100) comprising:
a housing (102) made of high-temperature material, the housing (102) having a first shell (104) and a second shell (132), the first shell (104) having a first receiving area (121) and a first window (116) that extends through the first shell (104); and
a liner (162) including elastomeric material, the liner (162) having a back side (174) configured to fit within the first receiving area (121) and a front side (172) having a retaining feature (176) configured to receive and retain the component;
wherein, when the liner (162) is disposed within the first receiving area (121) and the component is received by the retaining feature (176), the first window (116) corresponds to at least one portion of the component that is accessible.

2. The masking system of claim 1, wherein the second shell (132) includes a second receiving area (150) and a second window (144) that extends through the second shell (132).

3. The masking system of claim 2, wherein the liner (162) has a first part (170) and a second part (180) distinct from the first part (170).

4. The masking system of claim 1, wherein the housing (102) is additively manufactured.

5. The masking system of claim 4, wherein the liner (162) is additively manufactured.

6. The masking system of claim 1, wherein the first shell (104) is configured to be retained with the second shell (132).

7. The masking system of claim 6, wherein the first shell (104) has a frusto-cylindrical portion (110)and a rectangular portion (112)..

8. The masking system of claim 1, wherein the masking system is configured for the component to be a gas turbine component.

9. The masking system of claim 8, wherein the gas turbine component is a blade (10).

10. The masking system of claim 9, wherein the masking system is configured to enable the gas turbine component to undergo a high-temperature process.

11. The masking system of claim 10, wherein the high-temperature process includes HVOF coating.

12. The masking system of claim 1, wherein the first window (116) is unobstructed by the liner (162).
